# EUROPÄISCHE PATENTSCHRIFT

(11) **EP 0 561 246 B1**
(45) Veröffentlichungstag und Bekanntmachung des Hinweises auf die Patenterteilung: **04.12.1996**
(21) Anmeldenummer: 93103637.0
(22) Anmeldetag: 06.03.1993
(51) Int. Cl.: B23Q 3/12

(54) **Handwerkzeugmaschine mit Werkzeughalter**
Handheld machine tool with tool holder
Machine-outil portative avec porte-outil

(30) Priorität: 18.03.1992 DE 9203627 U
(43) Veröffentlichungstag der Anmeldung: 22.09.1993
(73) Patentinhaber: ROBERT BOSCH GMBH, 70442 Stuttgart (DE)
(72) Erfinder: Holzer, Peter, Ing., CH-4500 Solothurn (CH)

(56) Entgegenhaltungen:
- EP-A- 0 265 380
- WO-A-91/03676
- BE-A- 746 172
- DE-U- 1 912 299
- FR-A- 2 545 908
- US-A- 2 397 026

## Beschreibung

Die Erfindung geht aus von einer Handwerkzeugmaschine nach dem Oberbegriff des Anspruchs 1. Aus der EP-A-0 265 380 ist bereits eine Handwerkzeugmaschine mit einem Werkzeughalter bekannt, der eine kegelige Bohrung aufweist, die auf einen entsprechenden Konus einer Spindel aufsetzbar ist. Zum Spannen des Werkzeughalters auf der Spindel dient eine Ringfeder, die Verriegelungskugeln in Ausnehmungen in der Spindel drängt. Alternativ zur Ringfeder kann für jede Verriegelungskugel ein Tellerfederpaket vorgesehen sein, das sich über Gleitsteine an einer Griffhülse abstützt. Die besondere Formgebung der Ringfeder verteuert deren Herstellung. Die Alternativlösung mit den Tellerfederpaketen bringt eine hohe Teilezahl mit sich und verursacht daher einen hohen Fertigungs- und Montageaufwand.

### Vorteile der Erfindung

Die erfindungsgemäße Handwerkzeugmaschine mit den Merkmalen des Anspruchs 1 hat demgegenüber den Vorteil, daß das Verriegelungselement einfacher zu fertigen und zu montieren ist. Es findet ein billig herstellbares Federdrahtstück Verwendung, das lediglich durch Biegen bearbeitet wird.

Durch die in den abhängigen Ansprüchen aufgeführten Maßnahmen sind vorteilhafte Weiterbildungen und Verbesserungen der im Anspruch 1 angegebenen Handwerkzeugmaschine möglich. Besonders vorteilhaft ist es, daß die nicht eingespannten freien Enden der Federdrahtstücke mit einer Kurvenbahn in der Handhabe des Werkzeughalters zusammenarbeiten.

### Zeichnung

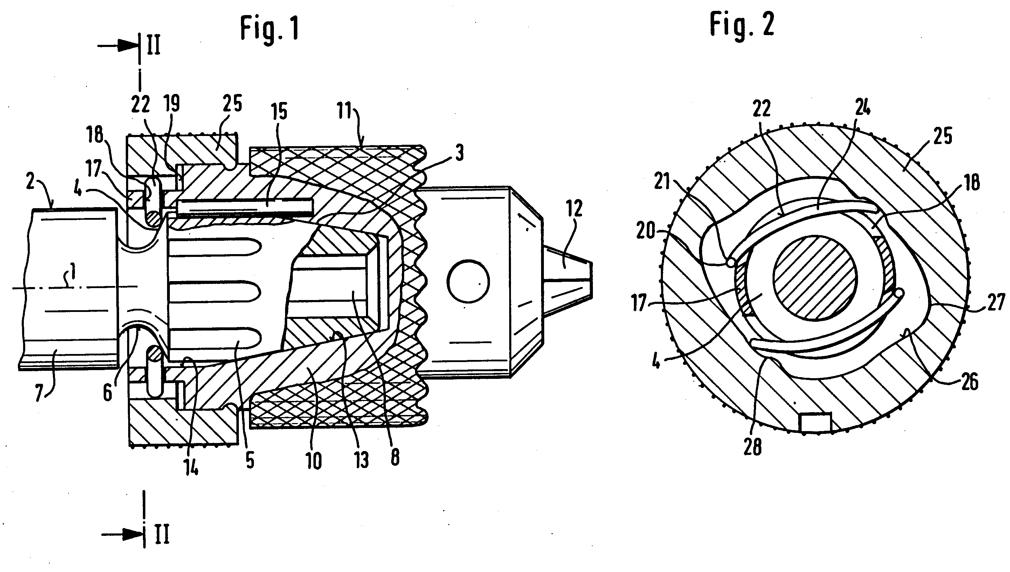

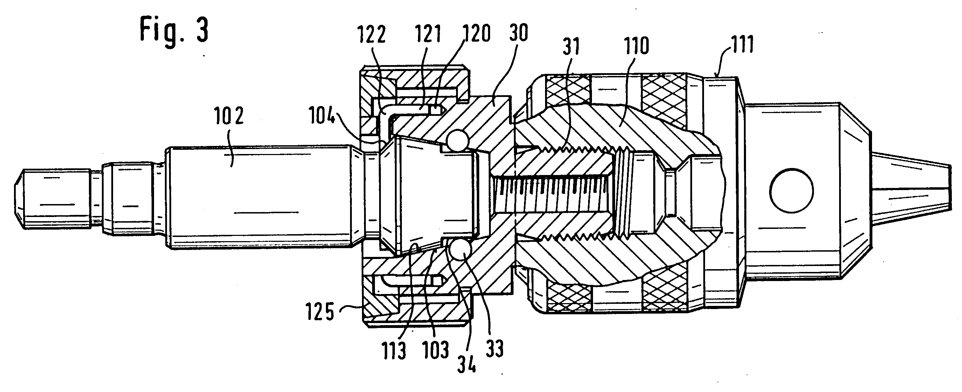

Mehrere Ausführungsbeispiele der Erfindung sind in der Zeichnung dargestellt und in der nachfolgenden Beschreibung näher erläutert. Figur 1 zeigt einen Querschnitt durch Spindel und Werkzeughalter einer erfindungsgemäßen Handwerkzeugmaschine, Figur 2 zeigt einen Querschnitt gemäß Linie II-II in Figur 1 und Figur 3 zeigt ein zweites Ausführungsbeispiel.

### Beschreibung der Ausführungsbeispiele

Von einer als Bohrmaschine, Schlagbohrmaschine oder Bohrhammer ausgebildeten Handwerkzeugmaschine ist in der Zeichnung nur eine aus deren Gehäuse vorn herausragende Spindel 2 mit Längsachse 1 dargestellt. Die Spindel 2 weist einen zu ihrem Ende hin sich verjüngenden Konus 3 und eine entgegengesetzt dazu sich konisch verjüngende Ringfläche 4 auf. Im Bereich des größten Durchmessers zwischen dem Konus 3 und der Ringfläche 4 ist die Spindel 2 mit axial sich erstreckenden Vertiefungen 5 versehen. An die Ringfläche 4 kann sich ein Einstich 6 anschließen, so daß der Schaft 7 der Spindel 2 wiederum einen größeren Durchmesser aufweist. Der Durchmesser der Spindel 2 kann aber auch ohne Einstich gleich bleiben. Am Ende der Spindel 2 befindet sich eine sechskantige Bitaufnahme 8, in die bei Benutzung der Handwerkzeugmaschine ohne Werkzeugaufnahme Schrauberbits direkt eingesetzt werden können.

Auf die Spindel 2 ist ein Grundkörper 10 eines Werkzeughalters bzw. Bohrfutters 11 aufsetzbar. Das Bohrfutter 11 ist vorzugsweise als Backenfutter mit verstellbaren Futterbacken 12 ausgebildet. Der Grundkörper 10 weist am den Futterbacken 12 entgegengesetzten Ende eine zu der Spindel 2 hin offene kegelige Bohrung 13 mit zum Ende hin zylindrischem Abschnitt 14 auf. Im Bereich des Übergangs von der Bohrung zu dem Abschnitt 14 ist in die Wand des Grundkörpers 10 in axialer Richtung ein nach innen vorstehender Stift 15 eingesetzt. Der Stift 15 korrespondiert mit einer der Vertiefungen 5 in der Spindel 2 und sorgt für eine formschlüssige Drehmitnahme des Bohrfutters 11 bezüglich der Spindel 2. Das spindelseitige Ende des Grundkörpers 10 wird gebildet von einem Kragen 17, der seitlich zwei lange Durchbrüche 18 zum zylindrischen Abschnitt 14 hin aufweist. Eine rückseitige Stirnfläche 19, auf der der Kragen 17 aufsitzt, weist zwei axial sich erstreckende Sacklöcher 20 auf (siehe auch Figur 3). In diese ist jeweils ein Endstück 21 eines Federdrahtstücks 22 eingesetzt, welches als Verriegelungselement dient. Nach seinem Austritt aus dem Sackloch 20 ist das Federdrahtstück 22 rechtwinklig umgebogen und bildet einen etwa tangential zum Kragen 17 verlaufenden Spannarm 24. Das Ende des Spannarmes 24 ist umgebogen und liegt an einem Spannring 25 an. Dieser ist auf dem Grundkörper 10 axial fest aber in Grenzen drehbar gelagert und weist an seiner dem Kragen 17 zugekehrte Innenseite je eine den Federdrahtstücken 22 zugeordnete Kurvenbahn 26 auf. Die Kurvenbahnen 26 weisen Einbuchtungen 27 und Rastmulden 28 auf. Am Umfang ist der Spannring 25 geriffelt, um die Handhabung zu erleichtern.

Mit der vorangehend beschriebenen Schnellwechselvorrichtung läßt sich das Bohrfutter einer Schlagbohrmaschine mit einem Handgriff mühelos mit der Spindel verbinden oder lösen. Zum Einsetzen des Bohrfutters 11 wird der Spannring 25, mit Blickrichtung auf die Maschine hin, nach links gedreht. In dieser Stellung können die Federdrahtstücke 22 in die Einbuchtungen 27 zurückweichen und geben den vollen Querschnitt des zylindrischen Abschnittes frei. Da die Endstücke 21 in den Sacklöchern 20 frei drehbar gelagert sind, ist kein zusätzlicher Kraftaufwand erforderlich. Das Bohrfutter zentriert sich über den Konus 3 und die kegelige Bohrung 13 selbst gegenüber der Spindel. Durch Rechtsdrehen des Spannrings 25 wird das Bohrfutter verriegelt. Dabei werden die Spannarme 24 der Federdrahtstücke nach innen gegen die Ringfläche 4 gespannt und drängen somit den Konus 3 der Spindel 2 gegen die kegelige Bohrung 13 des Bohrfutters 11. Das Bohrfutter 11 ist nun fest und sicher zentriert mit der Spindel 2 verbunden. Die Drehmitnahme des Bohrfutters wird durch den in eine der Vertiefungen 5 eingreifenden Stift 15 sichergestellt. Zur Demontage des Bohrfutters braucht lediglich der Spannring 25 nach links gedreht und das Bohrfutter 11 abgezogen zu werden. Nun kann beispielsweise ein anderes Bohrfutter verwendet werden oder ein Schrauberbit direkt in die Bitaufnahme 8 eingesetzt werden.

Das in Figur 3 gezeigte zweite Ausführungsbeispiel unterscheidet sich vor allem dadurch vom ersten, daß die mit der Spindel 2 zusammenwirkenden Kopplungselemente an einem Adapter 30 angeordnet sind, der ein Gewinde 31 zum Aufschrauben eines herkömmlichen Bohrfutters aufweist. Die ansonsten mit dem ersten Ausführungsbeispiel übereinstimmenden Bauelemente sind mit um einhundert erhöhten Bezugszahlen bezeichnet. Für die Drehmitnahme des Adapters 30 sind hier im Bereich der kegeligen Bohrung 113 tangential zwei Stifte 33 eingesetzt. An diesen liegen zwei an dem Konus 103 angebrachte Abflachungen 34 an.

Bei einem weiteren nicht gezeigten Ausführungsbeispiel steht die Ringfläche an der Spindel senkrecht zur deren Längsachse, ist also nicht konisch. Um von den Verriegelungselemente eine Spannkraft auf den Konus der Spindel ausüben zu können, sind diese in Durchbrüchen im Grundkörper des Bohrfutters geführt, die in einem Winkel von beispielsweise 45° schräg auf die Ringfläche zulaufen. Beim Zudrehen des Spannrings werden die Verriegelungselemente somit schräg nach vorne auf die Ringfläche zubewegt, wodurch sich wie bei der konischen Ausführung der Ringfläche eine mit zunehmendem Drehwinkel ansteigende Spannkraft ergibt. Die übrigen Elemente dieses Ausführungsbeispiels entsprechen dem ersten nach den Figuren 1 und 2.

## Patentansprüche

1. Handwerkzeugmaschine mit einem an einer drehend antreibbaren Spindel (2) lösbar befestigtem Werkzeughalter (11), der eine kegelige Bohrung (13) aufweist, die einen sich zum Ende der Spindel (2) hin verjüngenden Konus (3) übergreift und mit Drehmitnahmeelementen (5, 15) zwischen der Spindel (2) und dem Werkzeughalter (11), sowie mit im Werkzeughalter (11) angeordneten, von einem insbesondere drehbaren Spannring (25) beeinflußbaren Verriegelungselementen (22), die mit einer an der Spindel (2) angeordneten, unter einem Winkel zu deren Längsachse (1) verlaufenden Ringfläche (4) zusammenwirken, dadurch gekennzeichnet, daß die Verriegelungselemente als Federdrahtstücke (22) ausgebildet sind, die mit je einem Ende (21) im Grundkörper (10) verankert sind und zum anderen Ende hin je einen Spannarm (24) aufweisen, der mit einer Kurvenbahn (26) in dem Spannring (25) zusammenarbeitet.

2. Handwerkzeugmaschine nach Anspruch 1, dadurch gekennzeichnet, daß die Ringfläche (4) sich zur Handwerkzeugmaschine hin konisch verjüngt.

3. Handwerkzeugmaschine nach Anspruch 1, dadurch gekennzeichnet, daß die Ringfläche (4) etwa senkrecht zur Längsachse (1) der Spindel (2) verläuft.

4. Handwerkzeugmaschine nach einem der vorhergehenden Ansprüche, dadurch gekennzeichnet, daß die Verriegelungselemente (22) durch den Spannring (25) unter eigener Vorspannung an die Ringfläche (4) der Spindel (2) anpreßbar sind.

5. Handwerkzeugmaschine nach Anspruch 7, dadurch gekennzeichnet, daß die Kurvenbahn (26) je Verriegelungselement (22) eine Einbuchtung (27) und eine Rastmulde (28) aufweist.

6. Handwerkzeugmaschine nach einem der vorhergehenden Ansprüche, dadurch gekennzeichnet, daß die Verriegelungselemente (22) in dem Grundkörper (10) drehbar gelagert sind.

7. Handwerkzeugmaschine nach einem der vorhergehenden Ansprüche, dadurch gekennzeichnet, daß die Verriegelungselemente (22) an den freien Enden ihrer Spannarme (24) umgebogen sind.

8. Handwerkzeugmaschine nach einem der vorhergehenden Ansprüche, dadurch gekennzeichnet, daß der Werkzeughalter (11) mit der Spindel (2) zur Drehmitnahme durch formschlüssige Bauelemente (5, 15) verbunden ist.

9. Handwerkzeugmaschine nach einem der vorhergehenden Ansprüche 3 bis 8, dadurch gekennzeichnet, daß die Verriegelungselemente (22) Durchbrüche in dem Werkzeughalter (11) durchgreifen, die unter einem Winkel auf die Ringfläche (4) der Spindel zulaufen und die Verriegelungselemente (22) schräg auf die Ringfläche (4) hin führen.

10. Handwerkzeugmaschine nach einem der vorhergehenden Ansprüche, dadurch gekennzeichnet, daß die mit der Spindel (2) zusammenwirkenden Bauelemente Bohrung (13, 14), Drehmitnahmeelemente (15) und Verrieglungselemente (22) an einem Adapter (30) angeordnet sind, der mit dem Grundkörper (10) verschraubbar ist.

## Claims

1. Hand-held machine tool having a tool holder (11), which is detachably fastened to a rotionally drivable spindle (2) and has a tapered bore (13) which reaches over a cone (3) tapering towards the end of the spindle (2), and rotary-driving elements (5, 15) between the spindle (2) and the tool holder (11) as well as locking elements (22) which are arranged in the tool holder (11), can be influenced by an in particular rotatable clamping ring (25) and interact with an annular surface (4) arranged on the spindle (2) and running at an angle to its longitudinal axis (1), characterized in that the locking elements are designed as spring-wire pieces (22) which are anchored with one end (21) each in the basic body (10) and have towards the other end one clamping arm (24) each, which interacts with a curved path (26) in the clamping ring (25).

2. Hand-held machine tool according to Claim 1, characterized in that the annular surface (4) tapers conically towards the hand-held machine tool.

3. Hand-held machine tool according to Claim 1, characterized in that the annular surface (4) runs approximately perpendicularly to the longitudinal axis (1) of the spindle (2).

4. Hand-held machine tool according to one of the preceding claims, characterized in that the locking elements (22) can be pressed under intrinsic pretension against the annulur surface (4) of the spindle (2) by the clamping ring (25).

5. Hand-held machine tool according to Claim 7, characterized in that the curved path (26) has a niche (27) and a catch hollow (28) for each locking element (22).

6. Hand-held machine tool according to one of the preceding claims, characterized in that the locking elements (22) are rotatably mounted in the basic body (10)

7. Hand-held machine tool according to one of the preceding claims, characterized in that the locking elements (22) are bent over at the free ends of their clamping arms (24).

8. Hand-held machine tool according to one of the preceding claims, characterized in that the tool holder (11) is connected to the spindle (2) for rotary driving by positive-locking components (5, 15).

9. Hand-held machine tool according to one of the preceding Claims 3 to 8, characterized in that the locking elements (22) pass through apertures in the tool holder (11) which run at an angle towards the annular surface (4) of the spindle and guide the locking elements (22) obliquely towards the annular surface (4).

10. Hand-held machine tool according to one of the preceding claims, characterized in that the components - bore (13, 14), rotary-driving elements (15) and locking elements (22) - interacting with the spindle (2) are arranged on an adaptor (30) which can be screwed to the basic body (10).

## Revendications

1. Machine-outil portative avec un porte-outil (11) fixé de façon amovible sur une broche (2) qui peut être entraînée en rotation, porte-outil qui présente un perçage conique (13), qui vient en prise sur un cône (3) qui va en se rétrécissant vers l'extrémité de la broche (2) et avec des éléments d'entraînement en rotation (5, 15) entre la broche (2) et le porte-outil (11), ainsi qu'avec des éléments de verrouillage (22) disposés dans le porte-outil (11), et qui peuvent être influencés par une bague de serrage (25) pouvant en particulier tourner, éléments de verrouillage et qui coopèrent avec une surface annulaire (4) disposée sur la broche (2), et qui s'étend sous un certain angle par rapport à son axe longitudinal,
caractérisée en ce que
les éléments de verrouillage sont constitués sous la forme de pièces en fil d'acier à ressort (22), qui sont ancrées dans le corps de base (10) chacun par une extrémité (21) et présentent en direction de l'autre extrémité chacun un bras de serrage (24), qui coopère avec un chemin incurvé (26) dans la bague de serrage (25).

2. Machine-outil portative selon la revendication 1,
caractérisée en ce que
la surface annulaire (4) va en se rétrécissant de façon conique en direction de la machine-outil portative.

3. Machine-outil portative selon la revendication 1,
caractérisée en ce que
la surface annulaire (4) s'étend à peu près perpendiculairement à l'axe longitudinal (1) de la broche (2).

4. Machine-outil portative selon l'une des revendications précédentes,
caractérisée en ce que
les éléments de verrouillage (22) peuvent être pressés par la bague de serrage (25) sous sa propre précontrainte sur la surface annulaire (4) de la broche (2).

5. Machine-outil portative selon la revendication 7,
caractérisée en ce que
le chemin incurvé (26) présente un élément de verrouillage (22), une dentelure (27) et une cavité d'encliquetage (28).

6. Machine-outil portative selon l'une des revendications précédentes,
caractérisée en ce que
les éléments de verrouillage (22) sont montés de façon à pouvoir tourner dans le corps de base (10).

7. Machine-outil portative selon l'une des revendications précédentes,
caractérisée en ce que
les éléments de verrouillage (22) sont recourbés aux extrémités libres de leurs bras de serrage (24).

8. Machine-outil portative selon l'une des revendications précédentes,
caractérisée en ce que
le porte-outil (11) est relié à la broche (2) pour l'entraînement en rotation par des éléments constitutifs à engagement par la forme (5, 15).

9. Machine-outil portative selon l'une des revendications précédentes,
caractérisée en ce que
les éléments de verrouillage (22) pénètrent dans des ajoures dans le porte-outil (11), qui arrivent sous un certain angle sur la surface annulaire (4) de la broche et font passer les éléments de verrouillage (22) obliquement sur la surface annulaire (4).

10. Machine-outil portative selon l'une des revendications précédentes,
caractérisée en ce que
les éléments constitutifs, qui coopèrent avec la broche (2), le perçage (13, 14), les éléments d'entraînement en rotation (15) et les éléments de verrouillage (22), sont disposés sur un adaptateur (30), qui peut être vissé avec le corps de base (10).
